# FASCICULE DE BREVET EUROPEEN

(11) **EP 2 047 330 B1**
(45) Date de publication et mention de la délivrance du brevet: **22.01.2014**
(21) Numéro de dépôt: 07786386.8
(22) Date de dépôt: 27.07.2007
(51) Int. Cl.: G01V 8/10, G06K 9/00, G08B 13/196, G06K 9/20, H04N 5/225, H04N 5/272, G03B 15/16, G07C 9/00

(54) **DISPOSITIF DE CAPTURE DE LA SILHOUETTE D'UN INDIVIDU**
EINRICHTUNG ZUM ERFASSEN DER SILHOUETTE EINER PERSON
DEVICE FOR CAPTURING THE SILHOUETTE OF AN INDIVIDUAL

(30) Priorité: 03.08.2006 FR 0607136
(43) Date de publication de la demande: 15.04.2009
(73) Titulaire: MORPHO, 92130 Issy Les Moulineaux (FR)
(72) Inventeur: BERNARD, Emmanuel, 75015 Paris (FR); FOURRE, Joël-Yann, 75015 Paris (FR); LAMBERT, Laurent, 75015 Paris (FR)
(74) Mandataire: Maillet, Alain
(86) Numéro de dépôt international: PCT/EP2007/006672
(87) Numéro de publication internationale: WO 2008/014936

(56) Documents cités:
- EP-A- 0 150 697
- EP-A- 0 551 175
- EP-A1- 0 624 857
- FR-A- 2 409 364
- US-A- 5 283 551

## Description

La présente invention concerne un dispositif de capture de la silhouette d'un individu, un ensemble de plusieurs de ces dispositifs de capture ainsi qu'un sas utilisant un tel dispositif de capture. L'invention trouve application dans le domaine de l'analyse et de la reconnaissance de la silhouette d'un individu et, en particulier, d'un individu passant dans un sas de sécurité.

Afin de vérifier qu'un seul individu entre dans un bâtiment, un sas est prévu à l'entrée de ce bâtiment. Un tel sas peut comprendre une petite pièce avec une entrée et une sortie et un dispositif de détection d'unicité prévu pour vérifier qu'un seul individu traverse le sas.

On connaît un dispositif de détection d'unicité comprenant un tapis de sol constitué d'une matrice de capteurs et d'une unité de traitement électronique reliée aux différents capteurs. Les pieds d'un individu traversant le sas viennent en pression sur les capteurs et de ces différentes zones de pression, l'unité de traitement en déduit le nombre de pieds traversant le sas et donc le nombre d'individus passant simultanément à travers le sas. Un tel dispositif de détection d'unicité ne donne pas entière satisfaction car il ne permet pas de distinguer lorsqu'un individu traverse le sas en portant un autre individu sur son dos. Le dispositif de détection d'unicité détecte, en effet, une seule paire de pieds alors que deux individus ont traversé le sas.

Afin de résoudre ce problème, un autre dispositif de détection d'unicité a été développé. Ce dispositif de détection d'unicité comprend une unité de traitement électronique et un dispositif de capture de la silhouette de l'individu traversant le sas. Le dispositif de capture de la silhouette est prévu pour capturer une image de la silhouette de l'individu traversant le sas, pour transférer cette image à l'unité de traitement qui l'analyse pour en déduire qu'un seul individu traverse effectivement le sas. Un tel dispositif de capture comprend une paroi opaque verticale recouverte d'un damier de cases noires et blanches et une caméra dont l'objectif est orienté de manière à filmer ce damier. Lorsqu'un individu passe entre l'objectif et le damier, la caméra capture une image de contrôle sur laquelle figurent l'individu et le damier. L'image de contrôle est ensuite transférée à l'unité de traitement qui l'analyse pour pouvoir vérifier qu'un seul individu est effectivement passé.

L'analyse de l'image de contrôle peut consister, par exemple, à soustraire l'image du damier à l'image de contrôle afin d'en extraire la silhouette de l'individu. La silhouette d'un individu seul ou la silhouette d'un individu qui en porte un autre sont parfaitement différentiables et l'unité de traitement est prévue pour faire la distinction entre ces deux silhouettes.

Même si un tel dispositif de capture de la silhouette d'individus donne de bons résultats, il ne donne pas entière satisfaction.

En effet, un dispositif de détection d'unicité ou un sas de sécurité comportant un tel dispositif de capture ne permet pas, du fait de la présence de la paroi opaque, à un contrôleur posté à l'extérieur du dispositif de détection d'unicité ou du sas de sécurité, de voir l'intérieur de ce dernier. En cas de détection d'un problème par l'unité de traitement, le contrôleur doit alors se déplacer afin de vérifier la présence réelle ou non de l'incident.

En outre, la présence de parois opaques est préjudiciable vis-à-vis des personnes traversant le dispositif de détection d'unicité ou le sas de sécurité puisque ces personnes peuvent avoir un sentiment d'enfermement.

Le document EP-A-0 551 175 divulgue un dispositif de détection d'une personne passant devant un mur éclairé par des Leds IR dont les faisceaux se réfléchissent dans le mur et sont captés par une caméra. Le mur est opaque est fabriqué de bois, de pierre, et dans les cas où le matériau constituant le mur n'est pas suffisamment réfléchissant pour les IR, une peinture spécifique est apposée sur la paroi. L'homme du métier n'est donc pas incité à remplacer le mur opaque par une paroi transparente comme la présente invention le prévoit ci-après, puisque le document de l'état de la technique l'inciterait à recouvrir une telle paroi transparente d'une peinture non transparente.

Un objet de la présente invention est de proposer un dispositif de capture de la silhouette d'un individu qui ne présente pas les inconvénients de l'art antérieur.

A cet effet, est proposé
un dispositif de capture d'une silhouette selon la revendication indépendante 1.

Avantageusement, les motifs du dispositif sont disposés de manière répétitive.

Selon un mode de réalisation particulier, chaque motif est constitué d'un ensemble de catadioptres.

Avantageusement, le dispositif de vision comprend une caméra dont l'objectif est orienté vers la paroi et un dispositif d'éclairement prévu pour éclairer la paroi.

Avantageusement, le dispositif d'éclairement forme une couronne centrée sur l'axe de l'objectif de la caméra.

Avantageusement, le dispositif d'éclairement émet dans l'infrarouge et la caméra est une caméra infrarouge.

Avantageusement, le dispositif d'éclairement émet des faisceaux lumineux sous forme de flashs.

Avantageusement, les flashs sont synchronisés avec la fréquence d'acquisition de la caméra.

Avantageusement, les faisceaux lumineux émis sont pulsés.

L'invention propose également un sas de sécurité selon la revendication indépendante 9.

L'invention propose également un ensemble de plusieurs dispositifs de capture de la silhouette d'un individu selon la revendication indépendante 10.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de face d'un dispositif de capture de la silhouette d'un individu selon l'invention ;
la Fig. 2 représente une vue de côté d'un dispositif de capture de la silhouette d'un individu selon l'invention ;
la Fig. 3 représente une vue de côté d'un dispositif de capture de la silhouette d'un individu selon l'invention ;
la Fig. 4 représente un algorithme d'un procédé de commande d'un dispositif de capture selon l'invention et
la Fig. 5 représente un ensemble de sas selon l'invention.

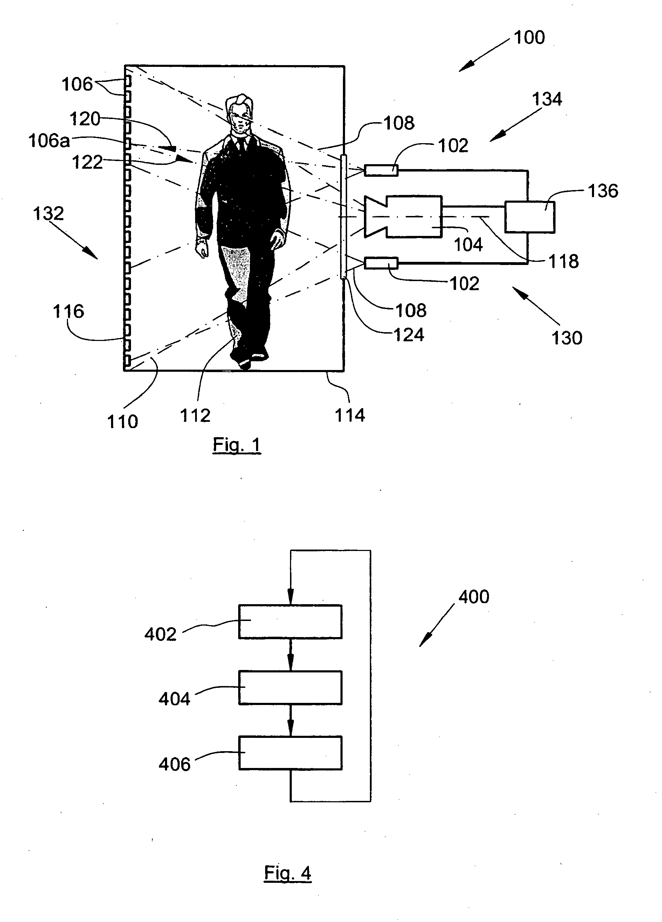

La Fig. 1 représente un dispositif de capture 100 de la silhouette d'un individu 112.

La Fig. 1 et, en particulier, les tracés des faisceaux lumineux qui sont décrits ci-après ne sont pas à l'échelle.

Le dispositif de capture 100 comprend un plancher 114 sur lequel se déplace l'individu 112, une paroi 132, un dispositif de vision 130 et une unité de traitement 136 connectée au dispositif de vision 130. L'individu 112 se déplace entre le dispositif de vision 130 et la paroi 132.

La paroi 132 comprend une paroi transparente 116 et une pluralité de motifs 106. Les motifs 106 sont positionnés sur la paroi transparente 116 et présentent un contraste avec la paroi transparente 116.

Du fait que la paroi 116 est réalisée dans un matériau transparent pour l'oei humain et qu'elle n'est pas entièrement recouverte par le motif 106, un contrôleur placé en dehors du dispositif de capture 100 peut observer l'intérieur de ce dernier à travers cette paroi transparente 116.

En outre, du fait de cette transparence, l'individu 112 traversant le dispositif de capture 100 ne se sent pas oppressé.

Le dispositif de vision 130 capture une image de la paroi 132 et donc des motifs 106. L'unité de traitement 136 est prévue pour analyser cette image et par recherche des motifs dans l'image, elle peut déterminer la silhouette de l'individu 112. L'analyse de l'image de contrôle peut consister, comme dans le cas d'état de la technique, à soustraire l'image de la paroi 132 sans individu 112 à l'image de la paroi 132 avec l'individu 112 afin d'en extraire la silhouette de l'individu 112. La différence de contraste entre la paroi transparente 116 et les motifs 106 permet de repérer ces motifs 106. Le contraste doit être suffisant pour pouvoir être repéré par l'unité de traitement 136 sur l'image capturée par la caméra 104.

Afin de faciliter l'analyse de l'image et, en particulier, la recherche des motifs 106, ceux-ci sont disposés de manière répétitive sur la paroi transparente 116.

Afin que cette analyse soit la plus précise possible, il est préférable que le coefficient de réflectivité des motifs 106 et le coefficient de réflectivité de la paroi transparente 116 soient très différents.

Le dispositif de vision 130 comprend une caméra 104 dont l'objectif est orienté vers la paroi 132, et afin d'améliorer encore le contraste entre la paroi transparente 116 et les motifs 106, le dispositif de vision 130 comprend également un dispositif d'éclairement 134 prévu pour éclairer la paroi 132 et donc les motifs 106. Cette éclairement permet d'augmenter le contraste entre les motifs 106 et la paroi transparente 116.

La caméra 104 présente un angle de vision 110 prévu pour permettre à tous les motifs 106 d'être vus par la caméra 104. L'angle de vision 110 est centré sur l'axe 118 de l'objectif de la caméra 104. L'axe 118 est sensiblement perpendiculaire à la paroi 132.

Selon un mode de réalisation particulier de l'invention, le dispositif d'éclairement 134 comprend une pluralité de sources lumineuses 102. L'ensemble des sources lumineuses 102 est prévu pour permettre l'éclairement de tous les motifs 106 vus par la caméra 104. Chaque source lumineuse 102 émet de la lumière sous la forme d'un cône d'émission 108. Les sources lumineuses 102 peuvent être des diodes électroluminescentes.

Selon un mode de réalisation particulier, les sources lumineuses 102 sont disposées en couronne centrée sur l'axe 118 de l'objectif de la caméra 104. Une telle disposition permet d'obtenir un éclairement d'une intensité sensiblement identique sur tous les motifs 106.

L'unité de traitement 136 est reliée aux sources lumineuses 102 et à la caméra 104. L'unité de traitement 136 commande, d'une part, l'allumage des différentes sources lumineuses 102 et, d'autre part, la capture d'au moins une image par la caméra 104.

Le faisceau lumineux 120 représente l'un des faisceaux lumineux émis par l'une des sources lumineuses 102 en direction du motif 106a et le faisceau lumineux 122 représente le faisceau lumineux réfléchi par ce motif 106a qui est capté par la caméra 104.

Les autres parois du dispositif de capture 100 sont également transparentes, ce qui peut entraîner l'éclairement des motifs 106 par des faisceaux lumineux émis depuis l'extérieur. Pour éviter que ces faisceaux viennent se réfléchir dans les motifs 106 en direction de la caméra 104 au risque de polluer l'image capturée par la caméra 104, chaque motif 106 prend la forme d'un ensemble de catadioptres. Chacun de ces ensembles prend ici la forme d'une pastille circulaire qui se fixe, par exemple par collage, sur la paroi transparente 116.

Chaque catadioptre constitue un système optique renvoyant la lumière en sens inverse et dans l'exacte direction d'où elle provient sous réserve d'un phénomène de diffusion. La droite référencée 120 représente le faisceau de lumière incident arrivant sur l'un des ensembles de catadioptres 106a et la droite référencée 122 représente le faisceau de lumière réfléchi repartant de l'un des catadioptres formant cet ensemble de catadioptres 106a. Le faisceau incident 120 et le faisceau réfléchi 122 ne sont pas confondus du fait de la légère diffusion qui a lieu lors de la réflexion sur le catadioptre. La non-superposition du faisceau incident 120 et du faisceau réfléchi 122 est accentuée par le fait que la Fig. 1 n'est pas à l'échelle. L'ensemble des faisceaux lumineux 122 réfléchis par le catadioptre forme sensiblement un cône dit de réflexion dont le sommet est le catadioptre réfléchissant et dont l'angle au sommet est égal à l'angle formé par les faisceaux lumineux réfléchis 122.

On doit entendre par "catadioptre", un système optique renvoyant la lumière en sens inverse et à l'intérieur du cône de réflexion. L'angle du cône de réflexion est de l'ordre de quelques degrés. Chaque ensemble de catadioptres comprend une pluralité de catadioptres.

L'utilisation d'ensembles de catadioptres 106 comme dispositifs réfléchissants évite que les lumières ambiantes viennent perturber l'image prise par la caméra 104. En effet, les lumières ambiantes proviennent principalement du soleil et des lampes des bâtiments, c'est-à-dire qu'elles sont disposées en hauteur et du fait de l'utilisation de catadioptres, ces lumières ambiantes sont réfléchies sensiblement en direction de leur source d'émission, c'est-à-dire vers le haut et non en direction de la caméra 104.

Comme cela a été expliqué ci-dessus, l'angle de diffusion des catadioptres 106 est petit, et pour que les faisceaux 120 émis par les sources lumineuses 102 et se réfléchissant dans les catadioptres soient captés par l'objectif de la caméra 104, les sources lumineuses 102 doivent être à une distance réduite de l'axe 118 de la caméra 104.

Pour éviter que l'image capturée par la caméra 104 soit trop polluée par des réflexions de faisceaux lumineux provenant de la paroi transparente 116, celle-ci doit avoir un coefficient de réflectivité faible par rapport à celui des catadioptres 106.

Le principe de fonctionnement du dispositif de capture 100 est le suivant.

En l'absence d'individu 112 dans le dispositif de capture 100, l'unité de traitement 136 commande l'allumage des différentes sources lumineuses 102, qui émettent des faisceaux lumineux 120 en direction de la paroi 132. Les faisceaux lumineux, ainsi émis, sont réfléchis par les catadioptres en direction de l'objectif de la caméra 104. La caméra 104 capture alors, l'image ainsi formée et la transmet à l'unité de traitement 136. L'unité de traitement 136 analyse l'image ainsi reçue et en déduit l'absence d'individu 112 dans le dispositif de capture 100.

En présence d'un individu 112 dans le dispositif de capture 100, l'unité de traitement 136 commande l'allumage des différentes sources lumineuses 102, qui émettent des faisceaux lumineux 120 en direction de la paroi 132. Les faisceaux lumineux, ainsi émis, qui rencontrent l'individu 112 ne sont pas réfléchis tandis que les autres sont réfléchis par les catadioptres en direction de l'objectif de la caméra 104. La caméra 104 capture alors l'image ainsi formée et la transmet à l'unité de traitement 136. L'unité de traitement 136 analyse l'image ainsi reçue et en déduit la présence d'un individu 112, ainsi que sa silhouette.

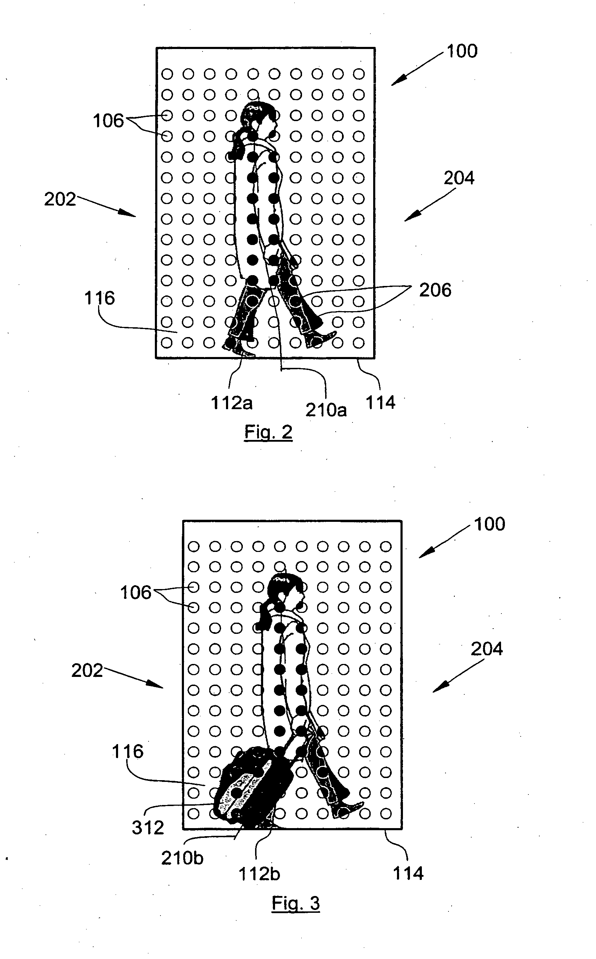

La Fig. 2 et la Fig. 3 présentent deux exemples d'utilisation du dispositif de capture d'une silhouette 100.

Sur la Fig. 2, l'individu 112a a une silhouette qui ne présente pas d'anomalie, tandis que sur la Fig. 3, la silhouette de l'individu 112b présente des anomalies dues à la présence d'un bagage 312 qui roule derrière lui.

L'individu 112a, 112b pénètre dans le dispositif de capture d'une silhouette 100 par l'une des extrémités 202 et ressort par l'autre extrémité 204. Au cours de cette traversée, la caméra 104 prend au moins une image des ensembles de catadioptres 106 éclairés par le dispositif d'éclairement 134 et la transmet à l'unité de traitement 136.

Sur les Figs. 2 et 3, les ensembles de catadioptres 106 qui sont assombris, au moins en partie, et qui sont référencés 206 correspondent aux ensembles de catadioptres 106 qui sont cachés derrière l'individu 112a, 112b et qui ne sont donc pas éclairés par le dispositif d'éclairement 134 ou pas vus par la caméra 104.

L'image capturée par la caméra 104 est alors analysée par l'unité de traitement 136 qui détermine la position des ensembles de catadioptres cachés 206 et en déduit la silhouette de l'individu 112a, 112b.

Dans le cas de la Fig. 2, la position des ensembles de catadioptres cachés 206 permet de présumer que l'individu 112a est seul et n'a pas de bagage.

Cette présomption peut être déterminée par exemple, par le fait que les ensembles de catadioptres cachés 206 sont tous localisés dans une zone qui s'étend de manière sensiblement symétrique de part et d'autre d'une courbe 210a. Pour chaque ligne horizontale d'ensembles de catadioptres 106, l'unité de traitement 136 détermine le barycentre des ensembles de catadioptres cachés 216 de ladite ligne et la courbe 210a représente la courbe reliant chacun de ces barycentres.

Dans le cas de la Fig. 3, la position des ensembles de catadioptres cachés 206 permet de présumer que l'individu 112b présente une silhouette comportant des anomalies qui peuvent être dues à la présence d'un bagage ou d'un chien.

Cette présomption peut être déterminée par exemple, par le fait que les ensembles de catadioptres cachés 206 ne sont pas tous localisés dans une zone qui s'étend de manière sensiblement symétrique de part et d'autre d'une courbe 210b, et, en particulier dans la partie inférieure de l'image. Pour chaque ligne horizontale d'ensembles de catadioptres 106, l'unité de traitement 136 détermine le barycentre des ensembles de catadioptres cachés 216 de ladite ligne et la courbe 210b représente la courbe reliant chacun de ces barycentres.

Dans le cas d'un individu portant un autre individu sur son dos, la déformation se situe au centre de l'image et à gauche de la courbe 210b.

Le nombre et la répartition des ensembles de catadioptres 106 doivent être tels, qu'il existe un instant donné, pour lequel la silhouette d'un individu 112a, 112b passant dans le dispositif de capture 100 est suffisamment couverte par les ensembles de catadioptres 106 pour que la silhouette soit reconnaissable.

Afin d'éviter l'éblouissement de l'individu 112a, 112b lors de sa traversée du dispositif de capture 100, le dispositif d'éclairement 134 émet dans l'infrarouge et la caméra 104 est une caméra infrarouge.

De préférence, la bande d'émission du dispositif d'éclairement 134 et la bande de réception de la caméra 104 sont identiques, c'est-à-dire que la caméra 104 est prévue pour capter uniquement les faisceaux lumineux dont la longueur d'onde est incluse dans la bande de réception. Ceci permet d'éviter que l'image capturée par la caméra 104 soit polluée par des sources infrarouges extérieures.

Afin de parfaire le filtrage des longueurs d'onde des faisceaux lumineux émis par le dispositif d'éclairement 134, un filtre 124 est placé entre le dispositif d'éclairement 134 et l'individu 112, c'est-à-dire en sortie des sources lumineuses 102 et à l'entrée de l'objectif de la caméra 104.

Selon un mode de réalisation particulier, l'émission de faisceaux lumineux par le dispositif d'éclairement 134 se fait sous forme de flashs lumineux qui sont synchronisés avec la fréquence d'acquisition de la caméra 104 pour permettre un meilleur rendu de l'image capturée par la caméra 104. Afin d'améliorer encore le rendu de l'image capturée, les faisceaux lumineux sont pulsés, c'est-à-dire qu'ils sont émis avec une forte puissance au moment de la capture et sont éteints le reste du temps.

La détermination de la silhouette de l'individu 112a, 112b traversant le dispositif de capture 100 peut s'effectuer de différentes manières. On citera, par exemple, la soustraction effectuée par l'unité de traitement 136, de l'image des ensembles de catadioptres 106 lorsqu'un individu 112a, 112b est présent et de l'image des ensembles de catadioptres 106 lorsqu'aucun individu 112a, 112b n'est pas présent, puis l'analyse du résultat. On citera également la recherche effectuée par l'unité de traitement 136, d'un motif répétitif et connu dans l'image des ensembles de catadioptres 106 capturée par la caméra 104. L'absence de ce motif étant représentatif d'un masquage dû à la présence d'un individu 112a, 112b. La détermination de chaque motif caché 206 permet alors de déterminer la silhouette de l'individu 112a, 112b.

Selon un mode de réalisation particulier de l'invention et dans le cas d'une détermination par recherche d'un motif, le motif répétitif prend la forme du cercle représentant un ensemble de catadioptre 106. Les cercles sont régulièrement disposés en lignes et en colonnes. Bien sûr la densité des ensembles de catadioptres 106, leur forme, leur espacement horizontal ou leur espacement vertical peuvent être modifiés tant que les ensembles des catadioptres 106 forment des motifs répétitifs et identifiables par l'unité de traitement 136.

Pour éviter que des faisceaux lumineux extérieurs viennent perturber le dispositif de capture 100 et, en particulier, la caméra 104, la paroi transparente 116 constitue un filtre qui bloque les longueurs d'onde identiques à la longueur d'onde des faisceaux lumineux émis par les sources lumineuses 102.

Dans un mode de réalisation particulier de l'invention, le cône d'émission 108 de chaque source lumineuse 102 présente un angle d'environ 60 degrés, chaque ensemble de catadioptre 106 a un rayon de 2 cm. Chaque ensemble de catadioptres 106 est verticalement et horizontalement espacé de ses voisins de 10 cm environ. La distance entre la paroi transparente 116 et l'objectif de la caméra est de 145 mm. Chaque source lumineuse 102 est distante d'environ 20 mm de l'axe 118. La surface de la paroi transparente 116 qui est recouverte par les ensembles de catadioptres 106 est de l'ordre de 5% de la surface totale.

Un dispositif de capture 100, tel que décrit ci-dessus, peut être utilisé pour différents buts. Par exemple, il peut être utilisé afin de comptabiliser le nombre d'individus entrant dans un bâtiment. Il peut être également utilisé dans un dispositif d'unicité utilisé dans un sas de sécurité afin de garantir que seul un individu traverse ledit sas à un instant donné.

Un tel sas de sécurité peut comprendre une porte d'entrée dans le sas, une porte de sortie du sas et un dispositif de capture 100 disposé entre la porte d'entrée et la porte de sortie. La porte d'entrée et la porte de sortie sont commandées par l'unité de traitement 136.

Un individu 112a, 112b, désirant traverser le sas, pénètre par la porte d'entrée qui, de préférence, se referme derrière lui. L'individu 112a, 112b traverse le sas et passe dans le dispositif de capture 100 qui analyse sa silhouette. Si la silhouette correspond à un individu seul 112a, la porte de sortie s'ouvre pour le laisser sortir. Si la silhouette correspond à un individu 112b dont la silhouette présente des anomalies, la porte de sortie ne s'ouvre pas et l'unité de traitement 136 envoie un signal à un surveillant afin que celui-ci valide ou non le passage de l'individu 112b.

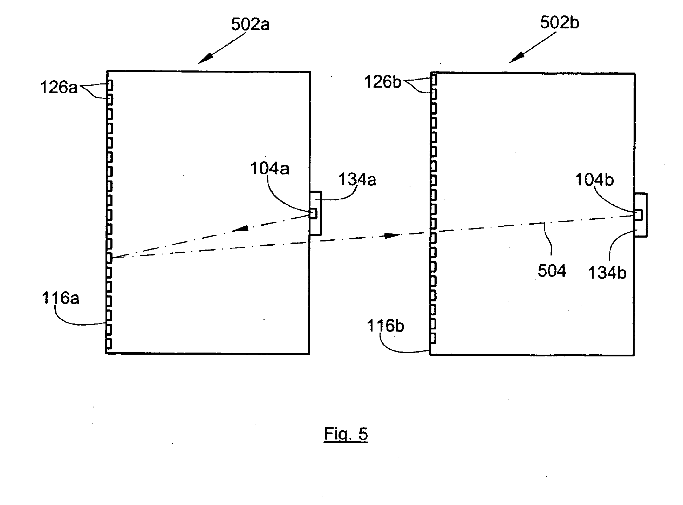

La Fig. 5 représente un ensemble 500 de deux sas de sécurité 502a et 502b qui sont disposés l'un à côté de l'autre. Cet ensemble de deux sas comprend ainsi deux dispositifs de capture tels que décrits ci-dessus.

Le premier sas de sécurité référencé 502a comprend une paroi transparente 116a, une pluralité de catadioptres 126a, un dispositif d'éclairement 134a et une caméra 104a.

Le deuxième sas de sécurité référencé 502b comprend une paroi transparente 116b, une pluralité de catadioptres 126b, un dispositif d'éclairement 134b et une caméra 104b.

Le deuxième sas 502b est disposé de manière à ce que sa paroi transparente 116b fait face au dispositif d'éclairement 134a et à la caméra 104a du premier sas 502a.

Du fait que les parois des sas 502a et 502b sont transparents pour les faisceaux émis par leurs dispositifs d'éclairement respectivement 134a et 13b, certains de ces faisceaux 504 émis par le premier sas 502a peuvent atteindre, après réflexions sur les catadioptres 126a du premier sas 502a, la caméra 104b du deuxième sas 502b. Un tel phénomène entraîne une mauvaise appréciation quant à la présence d'un ou plusieurs individus dans le deuxième sas 502b. C'est pourquoi, afin d'éviter que le dispositif d'éclairement 134a du premier sas 502a perturbe la caméra 104b du deuxième sas 502b, chaque dispositif d'éclairement 134a, 134b émet sur une longueur d'onde qui lui est propre et qui est différente de celle des autres dispositifs d'éclairement 134b, 134a. Chaque caméra 104a, 104b est alors prévue pour détecter uniquement la longueur d'onde du dispositif d'éclairement 134a, 134b qui lui est associé.

D'une manière générale, dans le cas d'un ensemble de plusieurs sas ou de plusieurs dispositifs de capture 100, les faisceaux lumineux émis par chaque dispositif de vision 130 présentent au moins une caractéristique physique différente de ceux émis par les autres dispositifs de vision 130 de l'ensemble et l'unité de traitement 136 est adaptée pour détecter cette ou ces caractéristiques.

Du fait de la présence des différentes parois transparentes 116a et 116b, un contrôleur peut facilement contrôler l'ensemble des sas.

La Fig. 4 représente un algorithme d'un procédé de commande 400 d'un dispositif de capture 100 tel que décrit ci-dessus.

Le procédé de commande 400 comprend :
- une étape d'éclairement 402,
- une étape de capture 404 et
- une étape d'analyse 406.

Au cours de l'étape d'éclairement 402, le dispositif d'éclairement 134 émet des faisceaux lumineux 120 en direction des ensembles de catadioptres 106, et ceci, de préférence, sous forme de flashs.

Au cours de l'étape de capture 404, la caméra capture l'image des ensembles de catadioptres 106, 206 et la transmet à l'unité de traitement 136.

Au cours de l'étape d'analyse 406, l'unité de traitement 136 reçoit l'image ainsi transmise et la traite afin de déterminer la silhouette de l'individu 112a, 112b traversant le dispositif de capture 100.

Dans le cas d'un sas de sécurité, l'étape d'analyse 406 peut être suivie d'une étape d'alarme, au cours de laquelle l'individu 112b dont la silhouette comporte des anomalies, est bloqué dans le sas et un signal est envoyé à un surveillant.

L'invention décrite ci-dessus a été plus particulièrement décrite dans le cas où une seule image est capturée par la caméra 100 lors de la traversée du dispositif de capture 100, mais il est également possible de capturer plusieurs images au cours de cette traversée et d'effectuer l'analyse de la silhouette pour chacune de ces images. Il est alors possible, à partir de cette pluralité d'analyses, de valider ou non la silhouette de l'individu 112a, 112b. Cette capture de plusieurs images peut se faire par enregistrement vidéo.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas d'une silhouette d'un individu, mais elle peut s'appliquer dans le cas d'un animal ou d'un objet.

Le dispositif de capture de l'invention peut également être associé à d'autres dispositifs de détection afin de croiser les résultats de chacun d'eux et ainsi de confirmer ou d'infirmer le fait qu'un ou plusieurs individus passent devant le dispositif de capture.

L'invention a été plus particulièrement décrite dans le cas où chaque motif est un ensemble de catadioptres, mais il est possible de prévoir que chaque motif est un carré blanc et que l'ensemble des motifs forme un damier dont les cases noires sont constituées de la paroi transparente.

## Revendications

1. Dispositif de capture d'une silhouette (100) comprenant :
- une paroi (132),
- un dispositif de vision (130) destiné à capturer au moins une image de ladite paroi (132) et comportant une caméra (104) dont l'objectif est orienté vers ladite paroi (132), et un dispositif d'éclairement (134) comportant une pluralité de sources lumineuses (102), et,
- une unité de traitement (136) connectée audit dispositif de vision (130) pour analyser la ou chaque image capturée et pour détecter la silhouette dudit individu passant entre ladite paroi (132) et ledit dispositif de vision (130),
le dispositif de capture (100) étant **caractérisé en ce que** chaque source lumineuse (102) fait face à ladite paroi (132), **en ce que** la paroi (132) comprend une paroi transparente (116) et une pluralité de motifs (106) positionnée sur ladite paroi transparente (116), chaque motif (106), présentant un contraste avec ladite paroi transparente (116) et étant destiné à réfléchir la lumière qu'il reçoit de chaque sources lumineuses (102) en sens inverse et dans la direction d'où elle provient.

2. Dispositif de capture (100) selon la revendication 1, **caractérisé en ce que** les motifs (106) sont disposés de manière répétitive.

3. Dispositif de capture (100) selon une des revendications 1 ou 2, **caractérisé en ce que** chaque motif (106) est constitué d'un ensemble de catadioptres.

4. Dispositif de capture (100) selon la revendication 1, **caractérisé en ce que** les sources lumineuses (102) sont disposées en couronne centrée sur l'axe (118) de l'objectif de la caméra (104).

5. Dispositif de capture (100) selon une des revendications 1 à 4, **caractérisé en ce que** le dispositif d'éclairement (134) émet dans l'infrarouge et **en ce que** la caméra (104) est une caméra infrarouge.

6. Dispositif de capture (100) selon une des revendications 1 à 5, **caractérisé en ce que** le dispositif d'éclairement (134) émet des faisceaux lumineux sous forme de flashs.

7. Dispositif de capture (100) selon la revendication 6, **caractérisé en ce que** les flashs sont synchronisés avec la fréquence d'acquisition de la caméra (104).

8. Dispositif de capture (100) selon une des revendications 1 à 7, **caractérisé en ce que** les faisceaux lumineux émis sont pulsés.

9. Sas de sécurité comprenant :
- une porte d'entrée,
- une porte de sortie et,
- un dispositif de capture de la silhouette d'un individu (100) selon une des revendications 1 à 8 disposé entre la porte d'entrée et la porte de sortie.

10. Ensemble (500) comprenant un premier dispositif de capture de la silhouette d'un individu selon une des revendications 1 à 8 et un deuxième dispositif de capture de la silhouette d'un individu selon une des revendications 1 à 8 disposé à côté dudit premier dispositif de capture, la caméra (104b) et le dispositif d'éclairement (134b) dudit deuxième dispositif de capture étant orientés vers la paroi (116a) dudit premier dispositif de capture, dans lequel les faisceaux lumineux émis le dispositif d'éclairement (134a) dudit premier dispositif de capture présentent des longueurs d'onde différentes des longueurs d'onde des faisceaux lumineux émis le dispositif d'éclairement (134b) dudit deuxième dispositif de capture et en ce que la caméra (104a, 104b) de chaque dispositif de capture est prévue pour détecter uniquement la longueur d'onde du dispositif d'éclairement (134a, 134b) qui lui est associé.

## Patentansprüche

1. Vorrichtung zur Erfassung einer Silhouette (100), die enthält:
- eine Wand (132),
- eine Sichteinrichtung (130), die dazu bestimmt ist, mindestens ein Bild der Wand (132) zu erfassen und eine Kamera (104), deren Objektiv auf die Wand gerichtet ist (132), und eine Beleuchtungseinrichtung (134) aufweist, die eine Vielzahl von Lichtquellen (102) aufweist, und
- eine Verarbeitungseinheit (136), die mit der Sichteinrichtung (130) verbunden ist, um das oder jedes erfasste Bild zu analysieren und um die Silhouette der zwischen der Wand (132) und der Sichteinrichtung (130) durchgehenden Person zu erkennen;
wobei die Erfassungsvorrichtung (100) **dadurch gekennzeichnet ist, dass** jede Lichtquelle (102) der Wand (132) gegenüber liegt, dass die Wand (132) eine transparente Wand (116) und eine Vielzahl von Mustern (106) enthält, die auf der transparenten Wand (116) positioniert sind, wobei jedes Muster (106) einen Kontrast zur transparenten Wand (116) darstellt und dazu bestimmt ist, das Licht, das es von jeder Lichtquelle (102) empfängt, in Gegenrichtung und in Richtung der Wand, von der es kommt, zu reflektieren.

2. Erfassungsvorrichtung (100) nach Anspruch 1, **dadurch gekennzeichnet, dass** die Muster (106) sich wiederholend angeordnet sind.

3. Erfassungsvorrichtung (100) nach einem der Ansprüche 1 oder 2, **dadurch gekennzeichnet, dass** jedes Muster (106) aus einer Einheit von Rückstrahlern besteht.

4. Erfassungsvorrichtung (100) nach Anspruch 1, **dadurch gekennzeichnet, dass** die Lichtquellen (102) kranzförmig auf die Achse (118) des Objektivs der Kamera (104) zentriert angeordnet sind.

5. Erfassungsvorrichtung (100) nach einem der Ansprüche 1 bis 4, **dadurch gekennzeichnet, dass** die Beleuchtungseinrichtung (134) im Infrarotbereich emittiert und dass die Kamera (104) eine Infrarotkamera ist.

6. Erfassungsvorrichtung (100) nach einem der Ansprüche 1 bis 5, **dadurch gekennzeichnet, dass** die Beleuchtungseinrichtung (134) Lichtstrahlen in Form von Blitzen emittiert.

7. Erfassungsvorrichtung (100) nach Anspruch 6, **dadurch gekennzeichnet, dass** die Blitze mit der Erfassungsfrequenz der Kamera (104) synchronisiert sind.

8. Erfassungsvorrichtung (100) nach einem der Ansprüche 1 bis 7, **dadurch gekennzeichnet, dass** die emittierten Lichtstrahlen gepulst sind.

9. Sicherheitsschleuse, die enthält:
- eine Eingangstür,
- eine Ausgangstür und
- eine Erfassungsvorrichtung der Silhouette einer Person (100) nach einem der Ansprüche 1 bis 8, die zwischen der Eingangstür und der Ausgangstür angeordnet ist.

10. Einheit (500), die eine erste Erfassungsvorrichtung der Silhouette einer Person nach einem der Ansprüche 1 bis 8 und eine zweite Erfassungsvorrichtung der Silhouette einer Person nach einem der Ansprüche 1 bis 8 aufweist, die neben der ersten Erfassungsvorrichtung angeordnet ist, wobei die Kamera (104b) und die Beleuchtungseinrichtung (134b) der zweiten Erfassungsvorrichtung zur Wand (116a) der ersten Erfassungsvorrichtung gerichtet sind, wobei die von der Beleuchtungseinrichtung (134a) der ersten Erfassungsvorrichtung emittierten Lichtstrahlen andere Wellenlängen als die Lichtstrahlen haben, die von der Beleuchtungseinrichtung (134b) der zweiten Erfassungsvorrichtung emittiert werden, und dass die Kamera (104a, 104b) jeder Erfassungsvorrichtung dafür vorgesehen ist, nur die Wellenlänge der ihr zugehörigen Beleuchtungseinrichtung (134a, 134b) zu erfassen.

## Claims

1. Device for capturing a silhouette (100), comprising:
- a wall (132),
- a vision device (130) provided for capturing at least one image of the said wall (132), and comprising a camera (104) whose lens is oriented towards the wall (132), and an illumination device (134) comprising a plurality of light sources (102), and
- a processing unit (136) connected to the said vision device (130) in order to analyse the or each image captured and to detect the silhouette of the said individual passing between the said wall (132) and the said vision device (130),
the capture device (100) being **characterised in that** each light source (102) is facing the said wall (132), **in that** the wall (132) comprises a transparent wall (116) and a plurality of patterns (106) positioned on the said transparent wall (116), each pattern (106), exhibiting a contrast with the said transparent wall (116) and being provided for reflecting the light it receives from each light sources (102) in the opposite direction and along the axis from which it comes.

2. Capture device (100) according to claim 1, **characterised in that** the patterns (106) are disposed repetitively.

3. Capture device (100) according to one of claims 1 or 2, **characterised in that** each pattern (106) consists of a set of reflectorized markers.

4. Capture device (100) according to claim 1, **characterised in that** the light sources (102) are disposed to form a ring centred on the axis (118) of the lens of the camera (104).

5. Capture device (100) according to one of claims 1 to 4, **characterised in that** the illumination device (134) emits in the infrared range and **in that** the camera (104) is an infrared camera.

6. Capture device (100) according to one of claims 1 to 5, **characterised in that** the illumination device (134) emits light beams in the form of flashes.

7. Capture device (100) according to claim 6, **characterised in that** the flashes are synchronised with the acquisition frequency of the camera (104).

8. Capture device (100) according to one of claims 1 to 7, **characterised in that** the light beams emitted are pulsed.

9. Security lobby comprising:
- an entrance door,
- an exit door, and
- a device for capturing the silhouette of an individual (100) according to one of claims 1 to 8, disposed between the entrance door and the exit door.

10. Set (500) comprising a first device for capturing the silhouette of an individual according to one of claims 1 to 8 and a second first device for capturing the silhouette of an individual according to one of claims 1 to 8 arranged on the side of said first capture device, the camera (104b) and the illumination device (134b) of the said second capture device being oriented towards the wall (116a) of the first capture device, in which the light beams emitted by the illumination device (134a) of the first capture device emits over wavelengths that are different from that of the illumination device (134b) of the said second capture device, and in that the camera (104a, 104b) of each capture device is provided to detect solely the wavelength of the illumination device (134a, 134b) that is associated with it.
